# EUROPÄISCHE PATENTSCHRIFT

(11) **EP 3 936 681 B1**
(45) Veröffentlichungstag und Bekanntmachung des Hinweises auf die Patenterteilung: **20.08.2025**
(21) Anmeldenummer: 20185319.9
(22) Anmeldetag: 10.07.2020
(51) Int. Cl.: E04F 15/02, E04F 15/04

(54) **MONTAGESYSTEM**
MOUNTING SYSTEM
SYSTÈME DE MONTAGE ASSOCIÉ

(43) Veröffentlichungstag der Anmeldung: 12.01.2022
(73) Patentinhaber: Schmitt, Götz S., 28832 Achim (DE)
(72) Erfinder: Voß, Marcus, 58239 Schwerte (DE)
(74) Vertreter: Eisenführ Speiser

(56) Entgegenhaltungen:
- WO-A1-2019/036146
- DE-A1- 102018 005 758
- KR-B1- 100 944 453

## Beschreibung

Die vorliegende Erfindung betrifft ein Montagesystem zur Montage von Montagestücken, insbesondere zur Montage von Dielen, in einer vertikalen oder einer horizontalen Ebene.

Viele Wohnhäuser oder auch Terrassen werden heutzutage mit Holzfußböden oder Holzwänden ausgestattet. Oftmals bestehen diese Holzfußböden oder Holzwände aus Paneelen, Fliesen oder Dielen, die bei der Montage miteinander verbunden werden müssen. Eine Art, die Paneelen, Fliesen oder Dielen miteinander zu verbinden, besteht darin, die einzelnen Elemente so auszugestalten, dass sie formschlüssig ineinandergreifen. Durch diese Ausgestaltung in entsprechend ineinandergreifender Form wird die Montage vereinfacht, allerdings ist hier die Flexibilität der möglichen Gestaltung der Holzfußböden und/oder Holzwände eingeschränkt, da die Montagestücke nur unter hohem Aufwand und mit hohen Kosten individuell eingestellt werden können.

Alternativ oder zusätzlich kann die Montage mittels sogenannter Montageclips erfolgen. Hierbei wird ein solcher Montageclip verwendet, um üblicherweise zwei bis vier Montagestücke, wie Paneelen, Fliesen oder Dielen, miteinander zu verbinden. Der Montageclip weist hierzu ein Halteelement auf, welches in mechanischer Weise mit einem Aufnahmeelement des Montagestück interagiert und so eine (mechanische) Verbindung herstellt. Da Montageclips als separate Elemente verkauft werden, erhöht die Verwendung solcher Montageclips die Flexibilität der Anordnung und Ausformung der Montagestücke. Ein Nachteil ist hier allerdings, dass die Montageclips bei der Montage "lose" mit den Montagestücken in Verbindung gebracht werden und so aus ihrer Position herausgeraten, sogar herausfallen können. Dies erschwert die Montage und kann die Wahrscheinlichkeit von Fehlern erhöhen.

Die KR 100 944 453 B1 betrifft eine Verbundholzplattenanordnung mit einer Aufnahmenut, einer Nut für ein Funktionselement, mehreren ersten Befestigungsnuten oder ersten Befestigungsvorsprüngen sowie einen entsprechenden Befestigungsclip. In der Aufnahmenut der Anordnung befinden sich zweite Befestigungsnuten oder zweite Befestigungsvorsprünge und sind dort trennbar angeordnet. Der offene Teil der Nut des Funktionselements ist schmal ausgestaltet und der untere Teil der Nut breit. Die ersten Befestigungsnuten oder die ersten Befestigungsvorsprünge sind mit den zweiten Befestigungsvorsprüngen oder den zweiten Befestigungsnuten, die in der Aufnahmenut ausgebildet sind, gekoppelt. Der Befestigungsclip weist eine Klinge auf, die die Verbundholzplatte verbindet.Vor diesem Hintergrund stellt sich die vorliegende Erfindung die Aufgabe, eine Montage von Montagestücken, insbesondere von Dielen, zu ermöglichen, die die vorstehend aufgeführten Nachteile nicht aufweist. Es ist insbesondere eine Aufgabe der Erfindung, einen Montageclip bereitzustellen, mit dem die Montage gegenüber den aus dem Stand der Technik bekannten Montageclips erleichtert werden kann.

Diese Aufgabe wird erfindungsgemäß gelöst durch ein Montagesystem gemäß Anspruch 1. Das Montagesystem umfasst einen Montageclip der vorstehend genannten Art, der eine Halteanordnung mit einem als ein erster Flügel ausgestalteten ersten Halteelement und einem als ein zweiter Flügel ausgestalteten zweiten Halteelement umfasst, wobei das erste Halteelement und das zweite Halteelement innerhalb der Halteanordnung symmetrisch angeordnet sind, wobei das erste Halteelement eingerichtet ist, mit einem ersten Aufnahmeelement eines ersten Montagestücks ineinanderzugreifen und das zweite Halteelement eingerichtet ist, mit einem zweiten Aufnahmeelement eines zweiten Montagestücks ineinanderzugreifen, wobei das erste Halteelement und das zweite Halteelement elastisch ausgestaltet sind, um mittels einer Vorspannung innerhalb des ersten Aufnahmeelements und des zweiten Aufnahmeelements gehalten zu werden, wobei der erste Flügel ein erstes oberes Vorspannungselement, ein erstes unteres Vorspannungselement und ein an dem ersten unteren Vorspannungselement angeordnetes erstes Abstandselement umfasst, wobei das erste obere Vorspannungselement und das erste untere Vorspannungselement einander gegenüberliegen, um bei Aufnahme in das erste Aufnahmeelement die Vorspannung für das erste Halteelement zu erzeugen, und wobei das erste Abstandselement eingerichtet ist, eine Eindringtiefe des ersten Halteelements in das erste Aufnahmeelement einzustellen, wobei der zweite Flügel ein zweites oberes Vorspannungselement, ein zweites unteres Vorspannungselement und ein an dem zweiten unteren Vorspannungselement angeordnetes zweites Abstandselement umfasst, wobei das zweite obere Vorspannungselement und das zweite untere Vorspannungselement einander gegenüberliegen, um bei Aufnahme in das zweite Aufnahmeelement die Vorspannung für das zweite Halteelement zu erzeugen, und wobei das zweite Abstandselement eingerichtet ist, eine Eindringtiefe des zweiten Halteelements in das zweite Aufnahmeelement einzustellen, um so einen Abstand zwischen den Montagestücken festzulegen; und eine Befestigungsanordnung mit einer Befestigungsaufnahme für ein Befestigungsmittel, wobei das Montagesystem ferner ein Befestigungselement umfasst, welches eingerichtet ist, in die Befestigungsaufnahme aufgenommen zu werden. Das Montagesystem wird dadurch gekennzeichnet, dass das Befestigungselement als Schraube ausgeführt ist und die Befestigungsaufnahme ein Gewinde aufweist, wobei die Schraube eingerichtet ist, durch Festziehen innerhalb des Gewindes eine Krafteinwirkung auf die Halteanordnung auszuüben, um so die Höhe des ersten Halteelements und die Höhe des zweiten Halteelements auf die Höhe des ersten und zweiten Montagestücks einzustellen.

Unter einer Halteanordnung wird insbesondere eine Anordnung verstanden, die die Montagestücke, insbesondere Dielen, hält. Hierzu weist die Halteanordnung zwei Halteelemente auf, die symmetrisch auf beiden Seiten der Halteanordnung angeordnet sind. Die Halteanordnung ist also symmetrisch gegenüber einer durch die Mitte der Halteanordnung verlaufenden gedachten Ebene ausgestaltet. Diese mittig verlaufende Ebene stellt somit eine Art Spiegelebene dar, auf deren beiden Seiten gleich ausgestaltete Halteelemente angeordnet sind.

Diese beiden Halteelemente, nachfolgend als erstes und zweites Halteelement bezeichnet, sind ausgestaltet, um jeweils mit einem Aufnahmeelement, nachfolgend als erstes und als zweites Aufnahmeelement bezeichnet, ineinanderzugreifen. Das erste Aufnahmeelement gehört hierbei zu einem ersten Montagestück, beispielsweise einer ersten Diele, und das zweite Aufnahmeelement gehört hierbei zu einem zweiten Montagestück, beispielsweise einer zweiten Diele. Das erste und das zweite Aufnahmeelement des ersten und zweiten Montagestücks dienen jeweils dazu, das erste und das zweite Halteelement in sich aufzunehmen. In einer Ausführungsform sind das erste und das zweite Aufnahmeelement beispielsweise als erste und zweite Nut innerhalb des ersten und zweiten Montagestücks ausgestaltet oder umfassen zumindest eine erste und eine zweite Nut.

Das erste und das zweite Halteelement sind elastisch ausgestaltet, um mittels einer Vorspannung innerhalb des ersten Aufnahmeelements und des zweiten Aufnahmeelements gehalten zu werden. Das bedeutet, dass das erste und das zweite Halteelement so ausgestaltet sind, dass sie mit dem ersten und zweiten Aufnahmeelement mechanisch zusammenwirken und zwar in einer Form, in der das erste Halteelement und das zweite Halteelement eine Vorspannung innerhalb des ersten und des zweiten Aufnahmeelements erzeugen. Diese Vorspannung dient dazu, das erste Halteelement in dem ersten Aufnahmeelement und das zweite Halteelement in dem zweiten Aufnahmeelement zu halten. Da es sich andererseits um eine Vorspannung und kein Einspannen mit höherer Spannkraft handelt, können das erste und das zweite Halteelement, beispielsweise im Falle einer Falschmontage oder aus anderen Gründen, auch noch einmal aus dem ersten und dem zweiten Aufnahmeelement entfernt werden, wenn dies nötig ist.

Der Montageclip umfasst ferner eine Befestigungsanordnung mit einer Befestigungsaufnahme für ein Befestigungsmittel. Ein solches Befestigungsmittel dient der endgültigen Befestigung des Montageclips zwischen den Montagestücken. Das Befestigungsmittel ist hierbei als Schraube ausgeführt, wobei die Befestigungsaufnahme der Befestigungsanordnung ein entsprechendes Gewinde, in welches die Schraube hineingedreht werden kann, umfassen kann. Das Befestigungsmittel, also die Schraube, kann separat von dem Montageclip bereitgestellt werden, um das Montagesystem auszuformen, oder kann in diesem vormontiert bereitgestellt werden, so dass ein Montagesystem, bestehend aus Montageclip und Befestigungsmittel, als Ganzes bereitgestellt wird.

Die Bereitstellung des Befestigungsmittels, insbesondere der Schraube, in vormontierter Weise in dem Montageclip ist besonders vorteilhaft. Hierdurch wird ermöglicht, dass der Montageclip unmittelbar mit einem passenden Befestigungsmittel bereitgestellt wird, das bereits so mit dem Montageclip zusammenwirkt, dass es nur noch zur Befestigung angezogen werden muss. Dadurch werden Fehlmontagen, beispielsweise durch ungenaues oder falsches Montieren des Befestigungsmittels, vermieden. Ferner erhöht die Bereitstellung eines vormontierten Befestigungsmittels, insbesondere einer vormontierten Schraube, die Effizienz bei der Montage der Montagestücke, da hier der ansonsten zusätzlich anfallende Schritt des Zusammenfügens des Montageclips mit dem Befestigungsmittel entfällt.

Eine solche Anordnung erlaubt es, das Befestigungsmittel, insbesondere die Schraube, zur endgültigen Befestigung anzuziehen. Durch dieses Anziehen werden das erste und das zweite Halteelement, welche beide elastisch ausgestaltet sind, in ihrer Form verändert.

Dies erlaubt, den Montageclip auf die jeweilig gewünschte Höhe der Montageclips, insbesondere auf die Dielenhöhe, abzustimmen. Hierdurch kann ein einziger Montageclip für Montagestücke mit unterschiedlichen Höhen verwendet werden.

Das erste Halteelement ist als ein erster Flügel ausgestaltet und das zweite Halteelement ist als ein zweiter Flügel ausgestaltet. Ferner umfasst der erste Flügel ein erstes oberes Vorspannungselement und ein erstes unteres Vorspannungselement, wobei das erste obere und das erste untere Vorspannungselement einander gegenüberliegen, um bei Aufnahme in das erste Aufnahmeelement die Vorspannung für das erste Halteelement zu erzeugen. Ferner umfasst der zweite Flügel ein zweites oberes Vorspannungselement und ein zweites unteres Vorspannungselement, wobei das zweite obere und das zweite untere Vorspannungselement einander gegenüberliegen, um bei Aufnahme in das zweite Aufnahmeelement die Vorspannung für das zweite Halteelement zu erzeugen.

In einigen Ausführungsformen sind das erste Halteelement und das zweite Halteelement insbesondere als erster und zweiter Flügel ausgestaltet, erstrecken sich also flügelförmig von einer mittleren Ebene der Halteanordnung. Hierbei umfasst der erste Flügel bevorzugt ein erstes oberes Vorspannungselement und ein erstes unteres Vorspannungselement und der zweite Flügel umfasst entsprechend ein zweites oberes Vorspannungselement und ein zweites unteres Vorspannungselement. Das obere und das untere Vorspannungselement wirken zusammen, um die Vorspannung innerhalb des jeweiligen Aufnahmeelements zu erzeugen.

In einigen Ausführungsformen besteht die Halteanordnung bevorzugt aus einem Blech oder einem Metall, wobei zwei Blechstücke sich von der Mitte der Halteanordnung aus symmetrisch erstrecken. Diese Blechstücke können in ihrer jeweiligen Mitte einmal um etwa 180° gebogen werden, um so die beiden Halteelemente mit dem oberen und dem unteren Vorspannelement zu erzeugen. Hierbei wird die Vorspannung dadurch erzeugt, dass sich das obere und das untere Vorspannelement bei Einführen in die Aufnahme einander annähern. Aufgrund der dieser Annäherung entgegenwirkenden Federkraft wird das Halteelement dann innerhalb des Aufnahmeelements vorgespannt. Hierdurch kann der Montageclip sozusagen "automatisch" innerhalb der Aufnahmeelemente zwischen den Montagestücken bis hin zur endgültigen Befestigung in Position gehalten werden.

Es ist weiterhin bevorzugt, dass das erste Halteelement ein erstes Abstandselement aufweist und das zweite Halteelement ein zweites Abstandselement aufweist, wobei das erste Abstandselement eingerichtet ist, eine Eindringtiefe des ersten Halteelements in das erste Aufnahmeelement einzustellen, und wobei das zweite Abstandselement eingerichtet ist, eine Eindringtiefe des zweiten Halteelements in das zweite Aufnahmeelement einzustellen, um so einen Abstand zwischen den Montagestücken festzulegen.

Das erste und das zweite Halteelement umfassen ferner ein Abstandselement, dass sozusagen als "Stopp" für das Einführen des Halteelements in das Aufnahmeelement dient. Hierzu verläuft das Abstandselement bevorzugt rechtwinklig zur Einführrichtung des Halteelements. Hierdurch kann das jeweilige Halteelement in das jeweilige Aufnahmeelement eingeführt werden, wird jedoch von einem weiteren Einführen abgehalten, wenn das Abstandselement auf die Außenseite des Aufnahmeelements auftrifft.

Durch eine derartige Ausformung des ersten Abstandselements und des zweiten Abstandselements, insbesondere dergestalt, dass sie in einem rechten Winkel zur Einführrichtung des Halteelements verlaufen, kann eine richtige Montageposition des Montageclips garantiert werden. Ferner wird durch die Bereitstellung des ersten und des zweiten Abstandselements der Abstand zwischen den Montagestücken, insbesondere der Fugenabstand zwischen den Dielen, automatisch richtig eingestellt. Hierbei muss beachtet werden, dass für unterschiedliche Abstände unterschiedliche Anordnungen des ersten und des zweiten Abstandselements am ersten und zweiten Halteelement nötig sind, so dass in dieser Hinsicht die Ausformung des Montageclips variiert werden kann.

Diese Ausgestaltung ist somit besonders vorteilhaft, um die automatische Zentrierung des Montageclips zwischen den Montagestücken und die damit besonders schöne und präzise Anordnung der Montagestücke zueinander zu erreichen. Insbesondere wirken die Flügel als Abstandshalter zwischen den Montagestücken. Ferner bewirkt die Vorspannung, die auf die Halteelemente wirkt, eine gute Ausrichtung des Montageclips.

Mittels des erfindungsgemäßen Montagesystems ist es möglich, zwei nebeneinanderliegende Montagestücke, insbesondere zwei nebeneinanderliegende Dielen, entlang einer Horizontalen oder einer Vertikalen zu montieren. Es ist also möglich, das Montagesystem sowohl bei der Erstellung eines Fußbodens, insbesondere eines Holzfußbodens, insbesondere einer Terrasse, zu verwenden, als auch bei der Erstellung einer Wand, insbesondere einer Holzwand, noch weiter insbesondere einer Fassade. Durch die spezielle Ausformung der Halteelemente dergestalt, dass sie eine Vorspannung erzeugen, wird der zum Montagesystem gehörige Montageclip bereits vor der eigentlichen Montage durch die Vorspannung in Position innerhalb des jeweiligen Aufnahmeelements, insbesondere der jeweiligen Nut, des Montagestücks, insbesondere der Diele, gehalten. Dadurch kann der Montageclip vorab in Position gebracht werden und ist in der Lage, in dieser Position selbstständig zu verharren.

Ferner erlaubt die Ausgestaltung des erfindungsgemäßen Montagesystems mit den elastischen Halteelementen, eine automatische Zentrierung des Montageclips zwischen den Montagestücken herbeizuführen, wodurch die Montage der Montagestücke erleichtert wird und eine besonders gute, präzise Anordnung der Montagestücke zueinander erreicht werden kann. Insbesondere können das erste Haltelement und das zweite Halteelement durch ihre Ausgestaltung nicht nur zu einem Halten des Montagestücks führen, sondern wirken auch als Abstandshalter zwischen den Montagestücken, so dass durch den erfindungsgemäßen Montageclip ein gleichmäßiger Abstand zwischen den individuellen Montagestücken bewirkt werden kann.

Es ist besonders bevorzugt, dass das erste Aufnahmeelement eine erste Nut umfasst und das zweite Aufnahmeelement eine zweite Nut umfasst, wobei das erste Halteelement und das zweite Halteelement eingerichtet sind, um mit der ersten Nut und der zweiten Nut zusammenzuwirken, um so jeweils die Vorspannung zu erzeugen.

In einigen Ausführungsformen umfasst die Halteanordnung ferner ein drittes Halteelement und ein viertes Halteelement, wobei das dritte und das vierte Haltelement ebenfalls innerhalb der Halteanordnung symmetrisch angeordnet sind, wobei das dritte Halteelement eingerichtet ist, mit dem ersten Aufnahmeelement des ersten Montagestücks ineinanderzugreifen und das vierte Halteelement eingerichtet ist, mit dem zweiten Aufnahmeelement des zweiten Montagestücks ineinanderzugreifen, wobei das dritte Halteelement und das vierte Halteelement elastisch ausgestaltet sind, um mittels einer Vorspannung innerhalb des ersten Aufnahmeelements und des zweiten Aufnahmeelements gehalten zu werden.

In einigen Ausführungsformen kann der Montageclip auch derart ausgestaltet sein, dass er vier Halteelemente umfasst. Hierbei können das erste und das zweite Halteelement symmetrisch zueinander angeordnet sein, wobei die Symmetrie entlang einer gedachten ersten Symmetrieebene durch die Mitte der Haltevorrichtung besteht. Ebenso können das dritte und das vierte Halteelement symmetrisch zueinander angeordnet sein, wobei die Symmetrie entlang der gedachten ersten Symmetrieebene durch die Mitte der Haltevorrichtung besteht.

In einigen Ausführungsformen können ferner das erste und das dritte Halteelement und das zweite und das vierte Halteelement jeweils symmetrisch zueinander angeordnet sein, wobei hier eine zweite gedachte Symmetrieebene existiert, die orthogonal zu der ersten gedachten Symmetrieebene verläuft.

In einigen Ausführungsformen können das erste und das dritte sowie das zweite und das vierte Halteelement jedoch auch so angeordnet sein, dass sie jeweils entlang einer Normalen der ersten Symmetrieebene hintereinander angeordnet sind, also entlang der Normalen zunächst das erste Halteelement und dann das dritte Halteelement angeordnet ist und, auf der anderen Seite der ersten Symmetrieebene entlang der Normalen zunächst das zweite Halteelement und dann das vierte Halteelement angeordnet sind. Die Symmetrie entlang der Symmetrieebene zwischen dem ersten und dem dritten und dem zweiten und dem vierten Halteelement ist auch in diesem Fall gegeben.

In beiden Fällen können das dritte und das vierte Halteelement also hierbei entsprechend eingerichtet sein, ebenfalls mit dem ersten beziehungsweise dem zweiten Aufnahmeelement zusammen zu wirken. Insbesondere sind das dritte und das vierte Halteelement genauso eingerichtet, wie im Zusammenhang mit den vorstehenden Ausführungsformen für das erste und das zweite Halteelement beschrieben.

Das Montagesystem kann einen Montageclip mit einem bereits vormontierten Befestigungsmittel, ausgeführt als Schraube umfassen. Hierdurch kann die Montage wesentlich schneller und effizienter erfolgen. Die Schraube wird hierbei durch die Halteanordnung innerhalb der Befestigungsaufnahme in Position gehalten und kann so festgezogen werden. Wie vorstehend beschrieben, können durch dieses Festziehen die elastischen Halteelemente der Halteanordnung verändert werden, so dass durch das Festziehen zum einen eine Befestigung der Montagestücke erfolgt, zum anderen aber auch die Höhe der Montagestücke eingestellt werden kann.

In einem noch weiteren Aspekt betrifft die Erfindung eine Anordnung aus zumindest einem Montagesystem gemäß einer der vorstehend beschriebenen Ausführungsformen und zumindest zwei Montagestücken, wobei die zumindest zwei Montagestücke durch das zumindest eine Montagesystem in einer Horizontalen oder einer Vertikalen montiert werden können.

In noch einem weiteren Aspekt betrifft die Erfindung ein Verfahren zur Herstellung eines Montageclips zur Montage von Montagestücken, insbesondere zur Montage von Dielen gemäß Anspruch 6.

In einem noch weiteren Aspekt betrifft die Erfindung ein Verfahren zur Montage von Montagestücken, insbesondere zur Montage von Dielen, gemäß Anspruch 7.

In noch einem weiteren Aspekt betrifft die Erfindung die Verwendung zumindest eines Montageclips gemäß einer der vorstehend beschriebenen Ausführungsformen zur Montage von Montagestücken mittels eines Montagesystems gemäß einer der vorstehend beschriebenen Ausführungsformen.

Es soll verstanden werden, dass erfindungsgemäße Ausführungsformen des Montageclips erfindungsgemäßen Ausführungsformen der weiteren Aspekte der Erfindung entsprechen, die vorstehend und nachstehend nicht näher beschrieben werden.

Die vorliegende Erfindung wird nachfolgend anhand der Figuren näher erläutert. Hierbei zeigen die Figuren 1 bis 5 Ausführungsformen der beanspruchten Erfindung, die Figuren 6 und 7 betreffen Beispiele, die nicht vom Anspruchsgegenstand umfasst, jedoch hilfreich für das bessere Verständnis der beanspruchten Lehre sind:

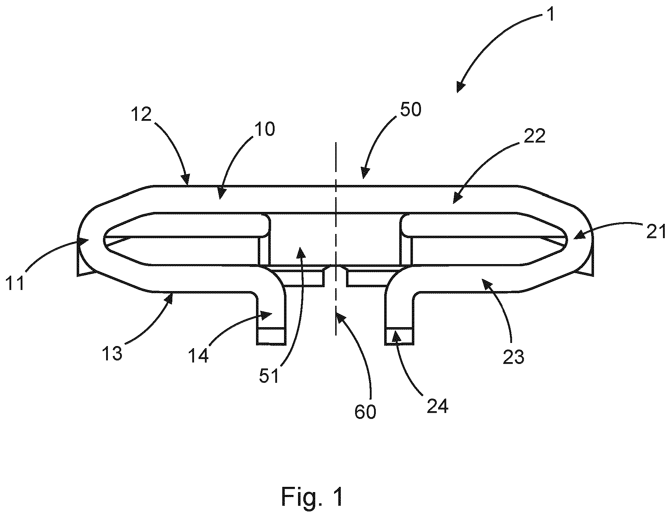

- Fig. 1: eine Seitenansicht eines Montageclips gemäß einer ersten bevorzugten Ausführungsform;

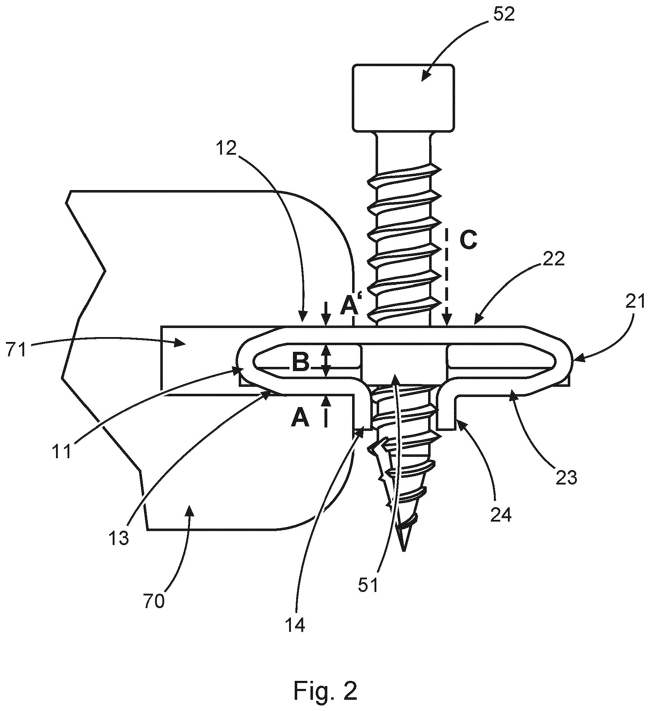

- Fig. 2: eine Seitenansicht eines Montagesystems gemäß einer bevorzugten Ausführungsform, angeordnet in einem Montagestück;

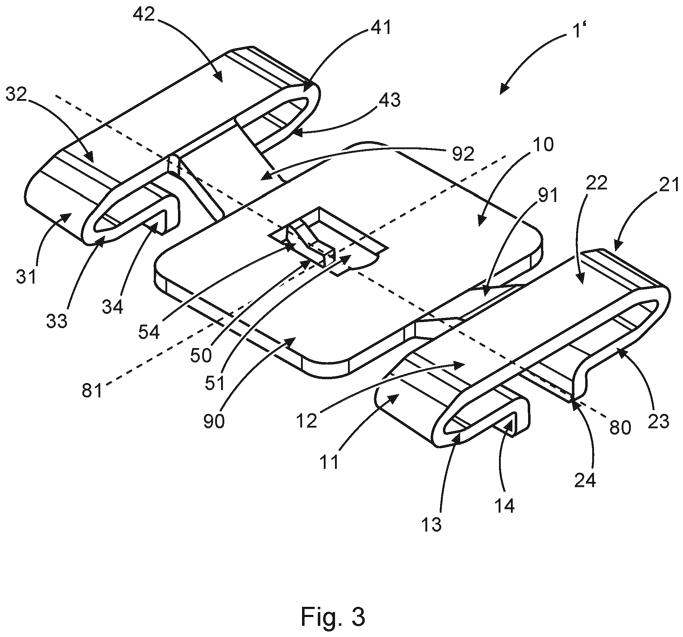

- Fig. 3: eine Draufsicht auf einen Montageclip gemäß einer zweiten bevorzugten Ausführungsform;

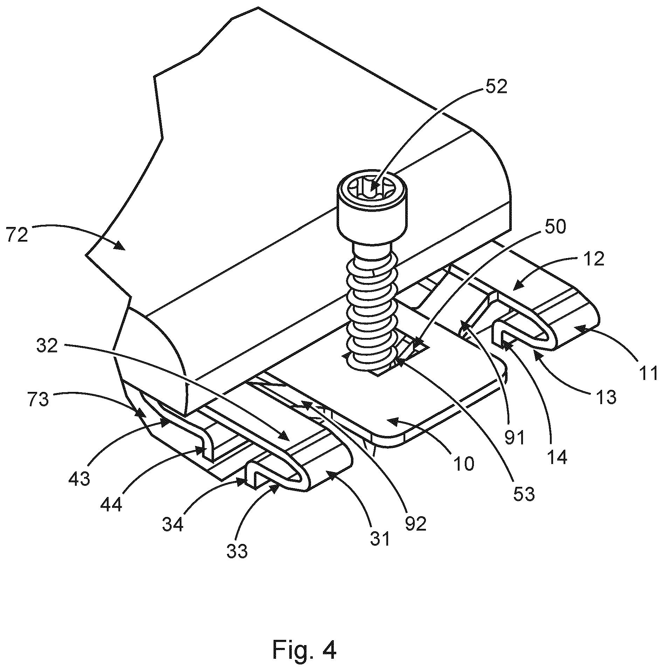

- Fig. 4: eine Draufsicht eines Montagesystems gemäß einer zweiten bevorzugten Ausführungsform, angeordnet in einem Montagestück;

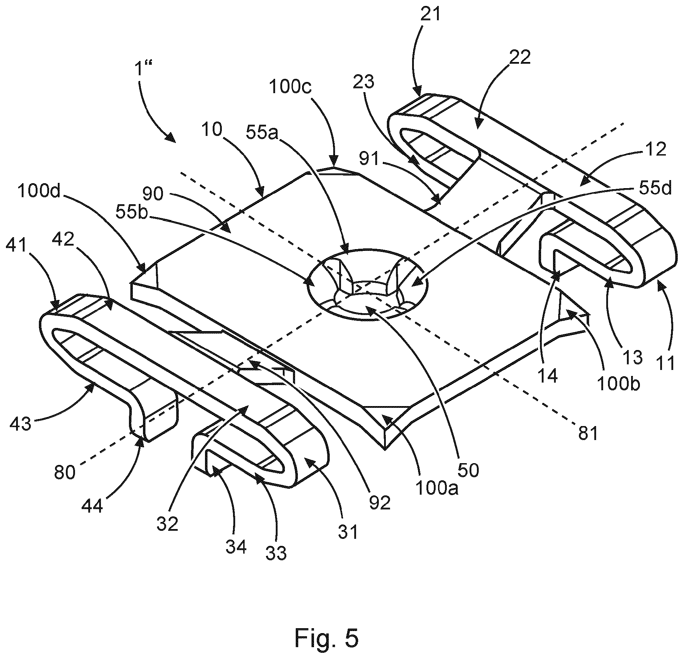

- Fig. 5: eine Draufsicht auf einen Montageclip gemäß einer dritten bevorzugten Ausführungsform;

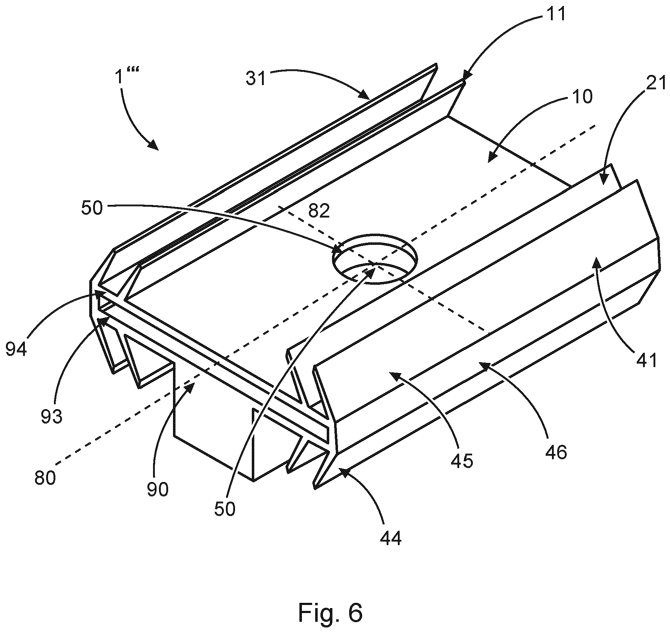

- Fig. 6: eine Draufsicht auf einen Montageclip gemäß einer nicht vom Schutz der Ansprüche umfassten Ausführungsform;

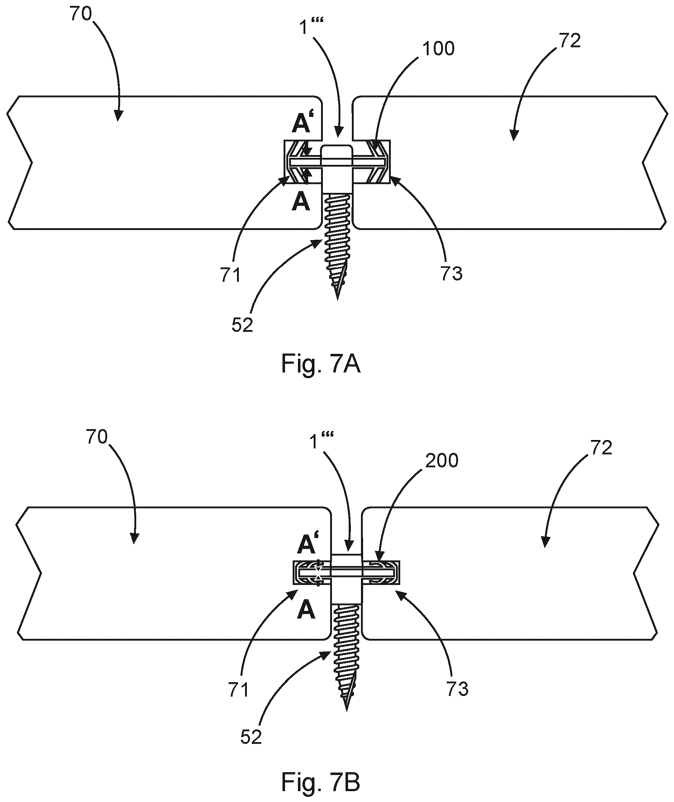

- Fig. 7A: eine Seitenansicht eines Montagesystems mit einem Montageclip der nicht vom Schutz der Ansprüche umfassten Ausführungsform in einer ersten Einstellung; und
- Fig. 7B: eine Seitenansicht eines Montagesystems mit einem Montageclip der nicht vom Schutz der Ansprüche umfassten Ausführungsform in einer zweiten Einstellung.

Die Fig. 1 zeigt eine Seitenansicht eines Montageclips 1 gemäß einer ersten bevorzugten Ausführungsform der Erfindung. Der Montageclip 1 umfasst eine Halteanordnung 10, ein erstes Halteelement 11, ein zweites Halteelement 21 sowie eine Befestigungsanordnung 50. Die Befestigungsanordnung 50 umfasst eine Befestigungsaufnahme 51 zur Aufnahme eines Befestigungselements (in der Fig.1 nicht dargestellt). In der spezifischen Ausführungsform der Fig. 1 ist die Befestigungsaufnahme 51 als Gewinde ausgestaltet, welches eingerichtet ist, beispielsweise eine Schraube als Befestigungselement aufzunehmen.

Das erste Halteelement 11 umfasst ein erstes oberes Vorspannelement 12 und ein erstes unteres Vorspannelement 13. Ferner umfasst das Halteelement 11 ein erstes Abstandselement 14. Das erste Halteelement 11 ist in der Ausführungsform der Fig. 1 als Flügel ausgestaltet. Dieser Flügel wird bevorzugt durch Biegen eines entsprechen Bleches um etwa 180° hergestellt, so dass sich aus dem geraden Blech das erste obere Vorspannelement 12 und das erste untere Vorspannelement 13 ausformen. Ferner wird das Endstück des ersten unten Vorspannelements 13 noch einmal um etwa 90° gebogen, um das erste Abstandselement 14 auszuformen.

Ebenso umfasst das zweite Halteelement 21 ein zweites oberes Vorspannelement 22 und ein zweites unteres Vorspannelement 23, sowie ein zweites Abstandselement 14. Das zweite Halteelement 21 ist in der Ausführungsform der Fig. 1 ebenfalls als Flügel ausgestaltet, der bevorzugt durch ein Biegen eines Bleches um etwa 180° hergestellt wird, um das zweite obere Vorspannelement 22 und das zweite untere Vorspannelement 23 auszuformen. Auch hier wird das Endstück des zweiten unteren Vorspannelements 23 noch einmal um etwa 90° gebogen, um das zweite Abstandselement 24 auszuformen.

Wie die Fig. 1 aufzeigt, ist die Halteanordnung 10 entlang der (gedachten) Symmetrieebene 60, welche durch die Mitte der Befestigungsanordnung 50 und der Halteanordnung 10 verläuft, (spiegel-)symmetrisch. Das heißt, das erste Halteelement 11 und das zweite Halteelement 21 sind symmetrisch angeordnet, weisen insbesondere denselben Abstand von der Mitte der Halteanordnung 10 und der Befestigungsanordnung 50 und dieselbe Größe ihrer Ausformung auf. Dies erlaubt beispielsweise, den Montageclip 1 beliebig gedreht zur Montage von Montagestücken, insbesondere Dielen, zu verwenden.

Eine Anordnung eines Montageclips 1 gemäß der Fig. 1 innerhalb eines Montagestücks 70 ist in der Fig. 2 gezeigt. Die Fig. 2 zeigt hierbei eine Seitenansicht eines Montagesystems bestehend aus einem Montageclip 1 und einem Befestigungsmittel 52 gemäß einer bevorzugten Ausführungsform, wobei das Montagesystem in einem Montagestück 70 angeordnet ist.

In der spezifischen Ausführungsform der Fig. 2 ist das Befestigungsmittel 52 als Schraube ausgeführt. Entsprechend ist die Befestigungsaufnahme 51 des Montageclips 1 als Gewinde ausgeführt. Das erste Halteelement 11 ist als Flügel mit einem ersten oberen Vorspannungselement 12 und einem ersten unteren Vorspannungselement 13 sowie einem Abstandselement 14 ausgeführt, die bevorzugt wie im Zusammenhang mit der Fig. 1 beschrieben ausgeformt wurden. Das erste Montagestück 70 umfasst ein erstes Aufnahmeelement 71. In der spezifischen Ausführungsform der Fig. 2 ist das erste Montagestück 70 als Diele ausgeführt, die eine Nut als erstes Aufnahmeelement 71 umfasst.

Zur Montage wird das erste Halteelement 11 in das erste Aufnahmeelement 71 eingeführt, bis das erste Halteelement 11 mit dem Abstandselement 14 auf die Außenseite des ersten Aufnahmeelements 71 des ersten Montagestücks 70 auftrifft. An dieser Stelle wird das Einführen des Halteelements 11 gestoppt. Das erste obere Vorspannungselement 12 und das erste untere Vorspannungselement 13 werden beim Einführen einander angenähert, also durch mechanischen Druck sozusagen "zusammengedrückt". Die Richtung dieser mechanischen Druckkraft ist in der Fig. 2 durch die Pfeile A, A' gekennzeichnet. Dieser Drucckraft wirkt eine Federkraft des Flügels entgegen. Die Richtung dieser Federkraft ist in der Fig. 2 durch den Pfeil B gekennzeichnet. Durch die diesem Zusammendrücken entgegenwirkende Federkraft wird innerhalb des ersten Aufnahmeelements 71 eine Vorspannung erzeugt, die das Halteelement 11 in Position hält.

Es ist nun möglich, ein zweites Montagestück (in der Fig. 2 nicht gezeigt) an dem zweiten Halteelement 21 des Montageclips 1 anzuordnen. Hierzu wird das zweite Halteelement 21, analog zum ersten Halteelement 11, in ein zweites Aufnahmeelement (nicht dargestellt) des zweiten Montagestücks eingeführt, bis das Einführen durch das zweite Abstandselement 24 gestoppt wird. Auch hier werden das zweite obere Vorspannungselement 22 und das zweite untere Vorspannungselement 23 während des Einführens einander angenähert und üben durch die der mechanischen Druckkraft entgegenwirkende Federkraft eine Vorspannung aus, die das zweite Halteelement 21 in Position hält.

Durch das Stoppen des Einführens des ersten Halteelements 11 in das erste Aufnahmeelement 71 des ersten Montagestücks 70 durch das erste Abstandselement 14 und durch das Stoppen des zweiten Halteelements 21 in das zweite Aufnahmeelement des zweiten Montagestücks durch das zweite Abstandselement 24 wird dafür gesorgt, dass die mittels des Montageclips 1 montierten Montagestücke immer einen festgelegten Abstand zueinander haben. In der spezifischen Ausführungsform der Fig. 2, in der die Montagestücke als Dielen ausgeführt sind, bedeutet dies, dass die Abstandselemente 14 und 24 einen festgelegten Fugenabstand garantieren können.

Im Anschluss an das Anordnen der beiden Montagestücke 70 an der Halteanordnung 10 wird das Befestigungsmittel 52 zur Befestigung angezogen. In der spezifischen Ausführungsform der Fig. 2, in der das Befestigungsmittel 51 als Schraube ausgeführt ist, bedeutet das, dass die Schraube innerhalb der Befestigungsaufnahme 51, also innerhalb des Gewindes, festgezogen wird. Beim Festziehen übt die Schraube eine Kraft auf die Halteanordnung aus. Die Richtung dieser Kraft ist in der Fig. 2 mit Pfeil C gekennzeichnet. Durch die Krafteinwirkung durch die Schraube können das erste Halteelement 11 und das zweite Halteelement 21 höhenverstellt werden. Die Schraube erlaubt daher, die Höhe des Montagestücks, in der spezifischen Ausführungsform der Fig. 2 also die Dielenhöhe, einzustellen. Dies erlaubt, ein- und denselben Montageclip 1 für unterschiedliche Dielenhöhen zu verwenden.

Die Fig. 3 zeigt einen Montageclip 1' gemäß einer zweiten Ausführungsform der Erfindung. Der Montageclip 1' umfasst in der zweiten Ausführungsform der Fig. 3 ein erstes Halteelement 11 und ein zweites Halteelement 21 sowie ein drittens Halteelement 31 und ein viertes Halteelement 41. Hierbei sind das erste Halteelement 11 und das zweite Halteelement 21 sowie das dritte Halteelement 31 und das vierte Halteelement 41 entlang einer ersten Symmetrieebene 80, deren (ungefährer) Verlauf durch die gestrichelte Linie in der Fig. 3 gekennzeichnet ist, symmetrisch zueinander. Ferner sind das erste Halteelement 11 und das zweite Halteelement 21 entlang einer zweiten Symmetrieebene 81, deren (ungefährer) Verlauf durch die gepunktete Linie in der Fig. 3 gekennzeichnet ist, symmetrisch zu dem dritten Halteelement 31 und dem vierten Halteelement 41.

Die Funktionsweise aller vier Halteelemente gleicht einander und ist wie im Zusammenhang wie mit der Fig. 2 beschrieben, wobei in der spezifischen Ausführungsform der Fig. 3 sowohl das erste Halteelement 11 als auch das dritte Halteelement 31 in das erste Aufnahmeelement 71 des ersten Montagestücks 70 aufgenommen werden und entsprechend sowohl das zweite Halteelement 21 als auch das vierte Halteelement 41 in das zweite Aufnahmeelement des zweiten Montagestücks aufgenommen werden, wie im Zusammenhang mit den Figuren 2 und 4 näher beschrieben.

In der zweiten Ausführungsform der Fig. 3 umfasst die Halteanordnung 10 einen Korpus 90, in welchem die Befestigungsanordnung 50 angeordnet ist. Das erste Halteelement 11 und das zweite Halteelement 21 sind über einen ersten Hebel 91 mit dem Korpus 90 verbunden. Ferner sind das dritte Halteelement 31 und das vierte Halteelement 41 über einen zweiten Hebel 92 mit dem Korpus 90 verbunden.

Die Befestigungsanordnung 50 der zweiten Ausführungsform der Fig. 3 umfasst außerdem eine erste Hebeleinrichtung (nicht dargestellt) und eine zweite Hebeleinrichtung 54 innerhalb der Befestigungsaufnahme 51. Die erste Hebeleinrichtung befindet sich aus Sicht der zweiten Symmetrieebene 81 auf der Seite des ersten Halteelements 11 und des zweiten Halteelements 21 und die zweite Hebeleinrichtung 53 befindet sich auf der Seite des dritten Halteelements 31 und des vierten Haltelements 41.

Die Funktionsweise des Montageclips 1' gemäß der Fig. 3 wird nachfolgend anhand des Montagesystems wie in der Fig. 4 gezeigt näher erläutert werden. Die Fig. 4 zeigt ein Montagesystem gemäß einer bevorzugten Ausführungsform der Erfindung umfassend einen Montageclip 1' wie vorstehend beschrieben, insbesondere einen Montageclip 1' mit einem ersten Halteelement 11, einem zweiten Halteelement 21, einem dritten Halteelement 31 und einem vierten Halteelement 41. In der Ausführungsform der Fig. 4 sind das zweite Halteelement 21 und das vierte Halteelement 41 in einem zweiten Aufnahmeelement 73 eines zweiten Montagestücks 72 angeordnet. In der spezifischen Ausführungsform der Fig. 4 ist das zweite Montagestück 72 als Diele ausgeführt, die eine Nut als zweites Aufnahmeelement 73 umfasst. Die Funktionsweise des Montageclips gemäß der Fig. 3 beim Einführen in das zweite Aufnahmeelement 73 entspricht der Funktionsweise wie im Zusammenhang mit der Fig. 2 beschrieben.

Auch hier ist das Befestigungsmittel 52 als Schraube ausgeführt. Der Montageclip umfasst vier Halteelemente 11, 21, 31, 41, wobei in der Ausführungsform der Fig. 4 das zweite Halteelement 21 (nicht dargestellt) und das diesem entlang der zweiten Symmetrieebene gegenüberliegende vierte Halteelement 41 in dem zweiten Aufnahmeelement 73 des zweiten Montagestücks 72 angeordnet sind. Sowohl das zweite Halteelement 21 als auch das vierte Halteelement 41 sind als Flügel mit einem zweiten oberen Vorspannungselement und einem zweiten unteren Vorspannungselement sowie einem zweiten Abstandselement (allesamt nicht dargestellt) und einem vierten oberen Vorspannungselement 42 und einem vierten unteren Vorspannungselement 43 sowie einem vierten Abstandselement 44 ausgeführt, die bevorzugt wie im Zusammenhang mit der Fig. 1 beschrieben ausgeformt wurden. Analoges gilt auch für das erste Halteelement 11, welches ebenfalls als Flügel mit einem ersten oberen Vorspannungselement 12 und einem ersten unteren Vorspannungselement 13 sowie einem ersten Abstandselement 14 ausgestattet ist, und für das dritte Halteelement 31, welches als Flügel mit einem dritten oberen Vorspannungselement 32 und einem dritten unteren Vorspannungselement 33 sowie einem dritten Abstandselement 34 ausgestaltet ist.

Zur Montage werden also das zweite Halteelement 21 und das vierte Halteelement 41 in das zweite Aufnahmeelement 73 eingeführt, bis beide mit ihren jeweiligen Abstandselementen 24, 44 auf die Außenseite des zweiten Aufnahmeelements 73 des zweiten Montagestücks 72 auftreffen und dort, wie im Zusammenhang mit der Fig. 2 beschrieben, gestoppt werden. Dieser Stopp sorgt dafür, dass bei Zusammenfügen des zweiten Montagestücks 72 mit dem ersten Montagestück 70 über den Montageclip 1' ein festgelegter Abstand zwischen den Montagestücken gewährleistet werden kann.

Auch hier werden das zweite obere Vorspannungselement 22 und das zweite untere Vorspannungselement 23 und das vierte obere Vorspannungselement 42 und das vierte untere Vorspannungselement 43 beim Einführen in das zweite Aufnahmeelement 73 durch mechanischen Druck sozusagen "zusammengedrückt". Dieser Druckkraft wirkt eine Federkraft der beiden Flügel, die das zweite Halteelement 21 und das vierte Halteelement 41 darstellen, entgegen. Durch die diesem Zusammendrücken entgegenwirkende Federkraft wird innerhalb des zweiten Aufnahmeelements 73 also die entsprechende Vorspannung erzeugt, die das zweite Halteelement 21 und das vierte Halteelement 41 in Position hält. Analog kann das erste Montagestück mittels des ersten Halteelements 11 und des dritten Halteelements 31 montiert werden.

Ein Unterschied zu der Ausführungsform der Fig. 2 besteht ferner in dem Befestigen mittels des Befestigungsmittels 52, welches auch in der Fig. 4 als Schraube ausgeführt ist. Wenn das Befestigungsmittel 52 angezogen wird, übt es eine Kraft auf die erste Hebeleinrichtung (nicht dargestellt) und die zweite Hebeleinrichtung 54 aus. Diese Kraft überträgt sich auf den ersten Hebel 91 und den zweiten Hebel 92, die in Antwort auf die Kraftauswirkung die vier Halteelemente 11, 21, 31 und 41 anheben und es somit erlauben, die Höhe des ersten Montagestücks (nicht dargestellt) und des zweiten Montagestücks 72 zu verstellen. In der spezifischen Ausführungsform der Fig. 4 handelt es sich bei den Montagestücken um Dielen, deren Höhe mittels der Hebelwirkung, die von dem Befestigungsmittel 52 ausgeht, eingestellt werden kann. Dies erlaubt es, ein- und denselben Montageclip 1' für unterschiedliche Dielenhöhen zu verwenden.

Die Fig. 5 zeigt einen Montageclip 1" gemäß einer dritten Ausführungsform der Erfindung, welche insbesondere als Weiterentwicklung des Montageclips 1' der Fig. 3 angesehen werden kann. Daher weist der Montageclip 1" größtenteils die gleichen Elemente auf, wie im Zusammenhang mit dem Montageclip 1' der Fig. 3 beschrieben. Insbesondere umfasst der Montageclip 1"in der Ausführungsform der Fig. 5 ein erstes Halteelement 11 und ein zweites Halteelement 21 sowie ein drittes Halteelement 31 und ein viertes Halteelement 41, die wie im Zusammenhang mit der Fig. 3 beschrieben, symmetrisch relativ zu den Symmetrieebenen 80 und 81 angeordnet sind.

Die Funktionsweise aller vier Halteelemente 11, 21, 31, 41 ist auch hier für alle vier Halteelemente gleich. Das bedeutet, die Halteelemente 11, 21, 31, 41 funktionieren wie im Zusammenhang mit den Figuren 2 und 4 beschrieben. Auch in der Fig. 5 werden also sowohl das erste Halteelement 11 als auch das dritte Halteelement 31 in das erste Aufnahmeelement 71 des ersten Montagestücks 70 aufgenommen und entsprechend sowohl das zweite Halteelement 21 als auch das vierte Halteelement 41 in das zweite Aufnahmeelement 73 des zweiten Montagestücks 72 aufgenommen.

Auch in der Ausführungsform der Fig. 5 umfasst die Halteanordnung 10 einen Korpus 90, in welchem die Befestigungsanordnung 50 angeordnet ist. Das erste Halteelement 11 und das zweite Halteelement 21 sind über einen ersten Hebel 91 mit dem Korpus 90 verbunden. Ferner sind das dritte Halteelement 31 und das vierte Halteelement 41 über einen zweiten Hebel 92 mit dem Korpus 90 verbunden.

Ein erster Unterschied zu der zweiten Ausführungsform der Fig. 3 besteht hierbei darin, dass die Befestigungsanordnung 50 der Fig. 5 keine Hebeleinrichtung, sondern vier kreuzförmig angeordnete Vorsprünge 55a, 55b, 55c (nicht dargestellt) und 55d umfasst. Die kreuzförmige Anordnung der vier Vorsprünge sorgt dafür, dass die Vorsprünge innerhalb der Befestigungsanordnung 50 in gleichem Abstand zueinander angeordnet sind, wobei die Mitte der vier Vorsprünge jeweils etwa im 45°-Winkel relativ zu der ersten beziehungsweise zweiten Symmetrieebene 80, 81 ausgerichtet ist.

Die Vorsprünge 55a, 55b, 55c und 55d bewirken ebenfalls eine Höhenverstellbarkeit des ersten und zweiten Montagestücks, ähnlich wie im Zusammenhang mit der Fig. 3 beschrieben. Beim Festziehen des Befestigungsmittels 52, insbesondere der Schraube, wirkt eine Kraft auf die Vorsprünge 55a, 55b, 55c und 55d, die auf die Halteelemente 11, 21, 31 und 41 übertragen wird, und so die Höhenverstellbarkeit des erste Montagestücks 70 und des zweiten Montagestücks 72 bewirkt.

Ein weiterer Unterschied zu der zweiten Ausführungsform der Fig. 3 besteht darin, dass der Korpus 90 der Haltevorrichtung 10 vier scharfe Kanten 100a, 100b, 100c und 100d aufweist. Diese scharfen Kanten 100a, 100b, 100c und 100d sind jeweils an den Ecken des Korpus 90 angeordnet. Die Kanten 100a, 100b, 100c und 100d verbessern die Montage des ersten Montagestücks 70 und des zweiten Montagestücks 72, wenn der Montageclip 1" durch das Befestigungsmittel 52 endgültig befestigt wird.

Beim Festziehen wird eine Kraft von oben auf den Korpus ausgeübt, der dafür sorgt, dass die scharfen Kanten 100a und 100b in das erste Aufnahmeelement 71 des ersten Montagestücks 70 hineingedrückt werden, gegebenenfalls eindringen. Dies sorgt für eine zusätzliche Sicherung des Korpus 90 in dem ersten Aufnahmeelement 71. Gleichermaßen werden die scharfen Kanten 100c und 100d beim Festziehen in das zweite Aufnahmeelement 73 des zweiten Montagestücks 72 hineingedrückt und/oder dringen in dieses ein, wodurch eine zusätzliche Sicherung des Korpus 90 in dem zweiten Aufnahmeelement 72 bewirkt wird.

Die Figur 6 zeigt einen Montageclip 1‴ gemäß einer nicht vom Schutz der Ansprüche umfassten Ausführungsform. Der Montageclip 1‴ umfasst ebenfalls eine Haltevorrichtung 10 mit einem ersten Halteelement 11, einem zweiten Halteelement 21, einem dritten Halteelement 31 und einem vierten Halteelement 41. Auch hier sind das erste Halteelement 11 und das dritte Halteelement 31 symmetrisch zum zweiten Halteelement 21 und vierten Halteelement 41 angeordnet. Auch in der vierten Ausführungsform der Fig. 6 werden das erste Halteelement 11 und das dritte Halteelement 31 durch das erste Aufnahmeelement 71 des ersten Montagestücks 70 aufgenommen. Entsprechend werden das zweite Halteelement 21 und das vierte Halteelement 41 in das zweite Aufnahmeelement 73 des zweiten Montagestücks 72 aufgenommen.

Anders als bei der zweiten und der dritten Ausführungsform sind das erste Halteelement 11 und das dritten Halteelement 31 beziehungsweise das zweite Halteelement 21 und das vierte Halteelement 41 nicht entlang einer zweiten Symmetrieebene 81 symmetrisch zueinander. Stattdessen sind das erste Halteelement 11 und das dritte Halteelement 31 beziehungsweise das zweite Halteelement 21 und das vierte Halteelement 41 entlang einer Normalen 82 durch die erste Symmetrieebene 80 aufeinander folgend angeordnet. Das bedeutet, das erste Halteelement 11 ist näher an der durch die Mitte der Halteanordnung 10 führende Symmetrieebene 80 angeordnet als das dritte Halteelement 31. Genauso ist das zweite Halteelement 21 näher an der Symmetrieebene 80 angeordnet als das vierte Halteelement 41.

Ein weiterer Unterschied zur zweiten und dritten Ausführungsform besteht in der Ausformung der Halteelemente, wie sie nachfolgend beispielhaft anhand des vierten Halteelements 41 erläutert wird. Das vierte Halteelement 41 umfasst eine erste Schrägfläche 44 und eine zweite Schrägfläche 45. Ferner umfasst das vierte Halteelement 41 eine Parallelfläche 46. Die Schrägfläche 44 schließt an die Parallelfläche 46 an und die Parallelfläche 46 schließt an die Schrägfläche 45 an, um so das vierte Halteelement 41 zu formen.

In der spezifischen Ausführungsform der Fig. 6 ist das dritte Halteelement 31 ebenso mit zwei Schrägflächen und einer diese Schrägflächen verbindenden Parallelfläche ausgestaltet. Das erste Halteelement 11 und das zweite Halteelement 21 weisen ebenfalls jeweils zwei Schrägflächen auf. Anders als das dritte Halteelement 31 und das vierte Halteelement 41 umfassen das erste Halteelement 11 und das zweite Halteelement 21 keine Parallelfläche. Stattdessen werden die erste Schrägfläche und die zweite Schrägfläche jeweils des ersten Halteelements 11 und des zweiten Halteelements 21 durch einen Korpus 90 der Haltevorrichtung 10 miteinander verbunden. In anderen Ausführungsformen können das erste Halteelements 11 und das zweite Halteelement 21 jedoch auch, alternativ oder zusätzlich, entsprechende Parallelflächen aufweisen, die die Schrägflächen verbinden.

Der Korpus 90 des Montageclips 1‴ der vierten Ausführungsform ist in dieser Ausführungsform als zwei parallel zueinander laufende Flächen 93 und 94 ausgestaltet, wobei der Abstand zwischen der ersten Fläche 93 und der zweiten Fläche 94 der Breite der Parallelfläche des dritten Halteelements 31 und der Breite der Parallelfläche 46 des vierten Halteelements 41 entspricht.

Die nicht vom Schutz der Ansprüche umfasste Ausführungsform der Fig. 6 umfasst ferner eine Befestigungsanordnung 50. Die Befestigungsanordnung 50 kann hierbei wie im Zusammenhang mit einer der Fig. 1, 3 und 5 beschrieben ausgestaltet sein. Es soll an dieser Stelle verstanden werden, dass der Montageclip 1‴ gemäß der vierten Ausführungsform nicht auf eine bestimmte Befestigungsanordnung beschränkt ist.

Die Funktionsweise des Montageclips 1‴ wird nun im Zusammenhang mit den Fig. 7A und 7B erläutert. So zeigt die Fig. 7A den Montageclip 1‴ der vierten Ausführungsform in einer ersten Befestigungsstellung 100. Die Fig. 7B zeigt den Montageclip 1‴ der vierten Ausführungsform in einer zweiten Befestigungsstellung 200.

Hierzu wird der Montageclip 1‴ mit dem ersten Halteelement und dem dritten Halteelement in dem ersten Aufnahmeelement 71 des ersten Montagestücks 70 aufgenommen und mit dem zweiten Halteelement und dem vierten Halteelement in das zweite Aufnahmeelement 73 des zweiten Montagestücks 72. Hierbei übt das erste Aufnahmeelement 71 eine Kraft auf das erste und das dritte Halteelement aus und das zweite Aufnahmeelement 73 übt eine Kraft auf das zweite und das vierte Halteelement aus, so dass die Schrägflächen der Halteelemente in Richtung des Korpus 90 gedrückt werden. Diese Druckrichtung ist in den Fig. 7A und 7B mittels der Pfeile A, A' schematisch dargestellt.

Wie sehr die Schrägflächen der Halteelemente in Richtung des Korpus 90 gebogen werden, hängt hierbei davon ab, wie groß das erste Aufnahmeelement 71 beziehungsweise das zweite Aufnahmeelement 73 ist. So liegen die Schrägflächen in der zweiten Befestigungsstellung 200 nahezu auf dem Korpus 90 auf, wohingegen sich die Schrägflächen in der ersten Befestigungsstellung 100 nahezu in ihrer Ursprungsposition befinden. Auch in diesem Fall erfolgt das endgültige Befestigen mittels des Befestigungselements 52, welches in der Befestigungsaufnahme 50 befestigt wird. Die Höhe der Dielen stellt sich im Falle des Montageclips 1‴ gemäß der vierten Ausführungsform automatisch ein. Hierdurch wird eine besonders effiziente Montage ermöglicht.

Der Vorteil dieser nicht vom Schutz der Ansprüche umfassten Ausführungsform besteht darin, dass eine besonders stabile Befestigung für größenflexibel ausgestaltete Aufnahmeelemente ermöglicht wird. Insbesondere kann ein- und derselbe Montageclip 1‴ für unterschiedliche hohe Aufnahmeelemente, insbesondere Nuten, verwendet werden. Diese hohe Variabilität des Montageclips 1‴ bewirkt, dass der Montageclip 1‴ universell einsetzbar ist. Dies vereinfacht nicht nur die Montage - da kein besonderer Montageclip 1‴ spezifisch für das Aufnahmeelement gewählt werden muss - sondern wirkt sich auch vorteilhaft auf die Lagerung aus, da hier lediglich ein universell einsetzbarer Montageclip 1‴ vorgehalten werden muss, der geeignet ist, mit sämtlichen gängigen Aufnahmeelementen, insbesondere Nuten, zusammenzuwirken.

Die vorstehend beschriebenen Ausführungsformen sind exemplarisch und nicht einschränkend zu verstehen, insbesondere ist die Erfindung nicht auf diese spezifischen Ausführungsformen begrenzt, sondern umfasst alle Montagesysteme und Verfahren gemäß den nachstehenden Ansprüchen.

## Patentansprüche

1. Montagesystem zur Montage von Montagestücken (70, 72), insbesondere zur Montage von Dielen, umfassend
einen Montageclip (1, 1', 1"), wobei der Montageclip (1, 1', 1") umfasst:
eine Halteanordnung (10) mit einem als ein erster Flügel ausgestalteten ersten Halteelement (11) und einem als ein zweiter Flügel ausgestalteten zweiten Halteelement (21), wobei das erste Halteelement (11) und das zweite Halteelement (21) innerhalb der Halteanordnung (10) symmetrisch angeordnet sind, wobei das erste Halteelement (11) eingerichtet ist, mit einem ersten Aufnahmeelement (71) eines ersten Montagestücks (70) ineinanderzugreifen und das zweite Halteelement (21) eingerichtet ist, mit einem zweiten Aufnahmeelement (73) eines zweiten Montagestücks (72) ineinanderzugreifen; wobei
das erste Halteelement (11) und das zweite Halteelement (21) elastisch ausgestaltet sind, um mittels einer Vorspannung innerhalb des ersten Aufnahmeelements (71) und des zweiten Aufnahmeelements (73) gehalten zu werden,
wobei der erste Flügel ein erstes oberes Vorspannungselement (12), ein erstes unteres Vorspannungselement (13) und ein an dem ersten unteren Vorspannungselement (13) angeordnetes erstes Abstandselement (14) umfasst,
wobei das erste obere Vorspannungselement (12) und das erste untere Vorspannungselement (13) einander gegenüberliegen, um bei Aufnahme in das erste Aufnahmeelement (71) die Vorspannung für das erste Halteelement (11) zu erzeugen, und
wobei das erste Abstandselement (14) eingerichtet ist, eine Eindringtiefe des ersten Halteelements (11) in das erste Aufnahmeelement (71) einzustellen;
wobei der zweite Flügel ein zweites oberes Vorspannungselement (22), ein zweites unteres Vorspannungselement (23) und ein an dem zweiten unteren Vorspannungselement (23) angeordnetes zweites Abstandselement (24) umfasst,
wobei das zweite obere Vorspannungselement (22) und das zweite untere Vorspannungselement (23) einander gegenüberliegen, um bei Aufnahme in das zweite Aufnahmeelement (73) die Vorspannung für das zweite Halteelement (21) zu erzeugen, und
wobei das zweite Abstandselement (24) eingerichtet ist, eine Eindringtiefe des zweiten Halteelements (21) in das zweite Aufnahmeelement (73) einzustellen, um so einen Abstand zwischen den Montagestücken (70) festzulegen; und
eine Befestigungsanordnung (50) mit einer Befestigungsaufnahme (51) für ein Befestigungsmittel (52), wobei das Montagesystem ferner ein Befestigungselement (52) umfasst, welches eingerichtet ist, in die Befestigungsaufnahme (51) aufgenommen zu werden;
**gekennzeichnet dadurch, dass**
das Befestigungselement (52) als Schraube ausgeführt ist und die Befestigungsaufnahme ein Gewinde aufweist, wobei die Schraube eingerichtet ist, durch Festziehen innerhalb des Gewindes eine Krafteinwirkung auf die Halteanordnung (20) auszuüben, um so die Höhe des ersten Halteelements (11) und die Höhe des zweiten Halteelements (21) auf die Höhe des ersten (70) und zweiten (72) Montagestücks einzustellen.

2. Montagesystem nach Anspruch 1, wobei das erste Aufnahmeelement (71) eine erste Nut umfasst und das zweite Aufnahmeelement (73) eine zweite Nut umfasst, wobei das erste Halteelement (11) und das zweite Halteelement (21) eingerichtet sind, um mit der ersten Nut und der zweiten Nut zusammenzuwirken, um so jeweils die Vorspannung zu erzeugen.

3. Montagesystem nach einem der vorherigen Ansprüche, wobei die Halteanordnung ferner ein drittes Halteelement (31) und ein viertes Halteelement (41) umfasst, wobei das dritte Halteelement (31) und das vierte Halteelement (41) ebenfalls innerhalb der Halteanordnung (10) symmetrisch angeordnet sind, wobei das dritte Halteelement (31) eingerichtet ist, mit dem ersten Aufnahmeelement (71) des ersten Montagestücks (70) ineinanderzugreifen und das vierte Halteelement (41) eingerichtet ist, mit dem zweiten Aufnahmeelement des zweiten Montagestücks ineinanderzugreifen; wobei
das dritte Halteelement (31) und das vierte Halteelement (41) elastisch ausgestaltet sind, um mittels einer Vorspannung innerhalb des ersten Aufnahmeelements (71) und des zweiten Aufnahmeelements gehalten zu werden.

4. Anordnung aus zumindest einem Montagesystem nach einem der Ansprüche 1 bis 3 und zumindest zwei Montagestücken (70), wobei die zumindest zwei Montagestücke (70) durch das zumindest eine Montagesystem in einer Horizontalen oder einer Vertikalen montiert werden können.

5. Verfahren zur Herstellung eines Montagesystems zur Montage von Montagestücken (70, 72), insbesondere zur Montage von Dielen, umfassend die folgenden Schritte:
Herstellen eines Montageclips (1, 1', 1"), umfassend:
Bereitstellen einer Halteanordnung (10) mit einem als ein erster Flügel ausgestalteten ersten Halteelement (11) und einem als ein zweiter Flügel ausgestalteten zweiten Halteelement (21), umfassend:
symmetrisches Anordnen des ersten Halteelements (11) und des zweiten Halteelements (21) innerhalb der Halteanordnung (10),
Ausformen des ersten Halteelements (11), um mit einem ersten Aufnahmeelement (71) eines ersten Montagestücks (70) ineinanderzugreifen, und
Ausformen des zweiten Halteelements (21), um mit einem zweiten Aufnahmeelement (73) eines zweiten Montagestücks (72) ineinanderzugreifen,
Ausgestalten des ersten Halteelements (11) und des zweiten Halteelements (21) als elastische Elemente, die eingerichtet sind, um mittels einer Vorspannung innerhalb des ersten Aufnahmeelements (71) und des zweiten Aufnahmeelements (73) gehalten zu werden,
wobei der erste Flügel ein erstes oberes Vorspannungselement (12), ein erstes unteres Vorspannungselement (13) und ein an dem ersten unteren Vorspannungselement (13) angeordnetes erstes Abstandselement (14) umfasst,
wobei das erste obere Vorspannungselement (12) und das erste untere Vorspannungselement (13) einander gegenüberliegen, um bei Aufnahme in das erste Aufnahmeelement (71) die Vorspannung für das erste Halteelement (11) zu erzeugen, und
wobei das erste Abstandselement (14) eingerichtet ist, eine Eindringtiefe des ersten Halteelements (11) in das erste Aufnahmeelement (71) einzustellen,
wobei der zweite Flügel ein zweites oberes Vorspannungselement (22), ein zweites unteres Vorspannungselement (23) und ein an dem zweiten unteren Vorspannungselement (23) angeordnetes zweites Abstandselement (24) umfasst,
wobei das zweite obere Vorspannungselement (22) und das zweite untere Vorspannungselement (23) einander gegenüberliegen, um bei Aufnahme in das zweite Aufnahmeelement (73) die Vorspannung für das zweite Halteelement (21) zu erzeugen, und
wobei das zweite Abstandselement (24) eingerichtet ist, eine Eindringtiefe des zweiten Halteelements (21) in das zweite Aufnahmeelement (73) einzustellen, um so einen Abstand zwischen den Montagestücken (70) festzulegen;
Bereitstellen einer Befestigungsanordnung (50) mit einer Befestigungsaufnahme (51) für ein Befestigungsmittel (52); und
Bereitstellen eines Befestigungselements (52), welches eingerichtet ist, in die Befestigungsaufnahme (51) aufgenommen zu werden;
**gekennzeichnet dadurch, dass**
das Befestigungselement (52) als Schraube ausgeführt ist und die Befestigungsaufnahme ein Gewinde aufweist, wobei die Schraube eingerichtet ist, durch Festziehen innerhalb des Gewindes eine Krafteinwirkung die Halteanordnung (20) auszuüben, um so die Höhe des ersten Halteelements (11) und die Höhe des zweiten Halteelements (21) auf die Höhe des ersten (70) und zweiten (72) Montagestücks einzustellen.

6. Verfahren zur Montage von Montagestücken (70, 72), insbesondere zur Montage von Dielen, umfassend:
Bereitstellen zumindest eines Montagesystems nach einem der Ansprüche 1 bis 3, und
Ausüben einer Krafteinwirkung, durch das als Schraube ausgeführte Befestigungselement (52) auf die Halteanordnung (20) des Montageclips (1, 1', 1") durch Festziehen der Schraube in dem Gewinde einer Befestigungsaufnahme (51) zur Einstellung der einer Höhe des ersten Halteelements (11) und der Höhe des zweiten Halteelements (21) auf die Höhe des ersten (70) und zweiten (72) Montagestücks.

7. Verwendung zumindest eines Montagesystems nach einem der Ansprüche 1 bis 3 zur Montage von Montagestücken (70, 72).

## Claims

1. Installation system for installing assembly pieces (70, 72), especially for installing planks, comprising
an installation clip (1, 1", 1"),wherein the installation clip (1, 1', 1") comprises:
a holding arrangement (10), wherein a first holding element (11) is designed as a first wing and a second holding element (21) is designed as a second wing, wherein the first holding element (11) and the second holding element (21) are arranged symmetrically inside the holding arrangement (10), wherein the first holding element (11) is configured to interlock with a first receiving element (71) of a first assembly piece (70), and wherein the second holding element (21) is configured to interlock with a second receiving element (73) of a second assembly piece (72); wherein
the first holding element (11) and the second holding element (21) are elastic in design in order to be held, by means of a pretensioning, inside the first receiving element (71) and the second holding element (73),
wherein the first wing comprises a first upper pretensioning element (12), a first lower pretensioning element (13), and a first spacing element (14) disposed below the first lower pretensioning element (13),
wherein the first upper pretensioning element (12) and the first lower pretensioning element (13) are disposed opposite one another, in order to create the pretension for the first holding element (11) upon being received into the first receiving element (71), and
wherein the first spacing element (14) is configured to set a penetration depth of the first holding element (11) into the first receiving element (71);
wherein the second wing comprises a second upper pretensioning element (22), a second lower pretensioning element (23), and a second spacing element (24) disposed below the second lower pretensioning element (23),
wherein the second upper pretensioning element (22) and the second lower pretensioning element (23) are disposed opposite one another, in order to create the pretension for the second holding element (21) upon being received into the first receiving element (73), and
wherein the second spacing element (24) is configured to set a penetration depth of the second holding element (21) into the second receiving element (73) and thereby defines a distance between the assembly pieces (70);
a fastening arrangement (50) with a fastening recess (51) for a fastening means (52), wherein the installation system further comprises a fastening element (52) that is configured to be received into the fastening recess (51);
**characterized in that:**
the fastening element (52) is implemented as a screw and the fastening recess comprises a thread, wherein the screw is configured to exert a force on the holding arrangement (20) by tightening within the thread, in order to set a height of the first holding element (11) and of the second holding element to the height of the first assembly piece (70) and the second assembly piece (72).

2. The installation system according to claim 1, wherein the first receiving element (71) comprises a first groove and the second receiving element (73) comprises a second groove, wherein the first holding element (11) and the second holding element (21) are configured to interact with the first groove and the second groove, in order to respectively create the preload.

3. The installation system according to any one of the preceding claims, wherein the holding arrangement further comprises a third holding element (31) and a fourth holding element (41), wherein the third holding element (31) and the fourth holding element (41) are also arranged symmetrically inside the holding arrangement (10), wherein the third holding element (31) is configured to interlock with the first receiving element (71) of the first assembly piece (70) and the fourth holding element (41) is configured to interlock with the second receiving element of the second assembly piece; wherein
the third holding element (31) and the fourth holding element (41) are configured elastically in order to be held by means of preload inside the first receiving element (71) and the second receiving element.

4. An arrangement of at least one installation system according to any one of claims 1 to 3 and at least two assembly pieces (70), wherein the at least two assembly pieces (70) can be installed using the at least one installation system in a horizontal or vertical orientation.

5. A method for producing an installation system for installing assembly pieces (70, 72), especially for installing planks, comprising the following steps:
Producing an installation clip (1, 1', 1") comprising:
providing a holding arrangement (10), wherein a first holding element (11) is designed as a first wing and a second holding element (21) is designed as a second wing, comprising:
symmetrically arranging the first holding element (11) and the second holding element (21) inside the holding arrangement (10),
shaping the first holding element (11) in order to interlock with a first receiving element (71) of a first assembly piece (70), and
shaping the second holding element (21) in order to interlock with a second receiving element (73) of a second assembly piece (72),
configuring the first holding element (11) and the second holding element (21) as elastic elements that are configured to be held inside the first receiving element (71) and the second receiving element (73) by means of a preload,
wherein the first wing comprises a first upper pretensioning element (12), a first lower pretensioning element (13), and a first spacing element (14) disposed below the first lower pretensioning element (13),
wherein the first upper pretensioning element (12) and the first lower pretensioning element (13) are disposed opposite one another, in order to create the pretension for the first holding element (11) upon being received into the first receiving element (71), and
wherein the first spacing element (14) is configured to set a penetration depth of the first holding element (11) into the first receiving element (71);
wherein the second wing comprises a second upper pretensioning element (22), a second lower pretensioning element (23), and a second spacing element (24) disposed below the second lower pretensioning element (23),
wherein the second upper pretensioning element (22) and the second lower pretensioning element (23) are disposed opposite one another, in order to create the pretension for the second holding element (21) upon being received into the first receiving element (73), and
wherein the second spacing element (24) is configured to set a penetration depth of the second holding element (21) into the second receiving element (73) and thereby defines a distance between the assembly pieces (70);
providing a fastening arrangement (50) with a fastening recess (51) for a fastening means (52), and
providing a fastening element (52) that is configured to be received into the fastening recess (51);
**characterized in that:**
the fastening element (52) is implemented as a screw and the fastening recess comprises a thread, wherein the screw is configured to exert a force on the holding arrangement (10) by tightening within the thread, in order to set the height of the first holding element (11) and of the second holding element (21) to the height of the first assembly piece (70) and the second assembly piece (72).

6. A method for installing assembly pieces (70, 72), especially for installing planks, comprising:
providing at least one installation system according to any one of claims 1 to 3, and
exertion of a force by the fastening element (52) being implemented a screw on the holding arrangement (10) of the installation clip (1, 1', 1") by tightening the screw inside the thread of the fastening recess (51) in order to set the height of the first holding element (11) and the height of a second holding element (21) to the height of the first (70) and the second (72) assembly piece.

7. Use of at least one installation system according to any one of claims 1 to 3 for installing assembly pieces (70, 72).

## Revendications

1. Système de montage pour le montage de pièces de montage (70, 72), en particulier pour le montage de lames, comprenant
un clip de montage (1, 1', 1"), le clip de montage (1, 1', 1") comprenant:
un agencement de retenue (10) avec un premier élément de retenue (11) conçu comme une première aile et un deuxième élément de retenue (21) conçu comme une deuxième aile, le premier élément de retenue (11) et le deuxième élément de retenue (21) étant agencés symétriquement à l'intérieur de l'agencement de retenue (10), le premier élément de retenue (11) étant configuré pour s'emboîter avec un premier élément d'accueil (71) d'une première pièce de montage (70) et le deuxième élément de retenue (21) étant configuré pour s'emboîter avec un deuxième élément d'accueil (73) d'une deuxième pièce de montage (72);
le premier élément de retenue (11) et le deuxième élément de retenue (21) étant conçus de manière élastique pour être maintenus à l'intérieur du premier élément d'accueil (71) et du deuxième élément d'accueil (73) au moyen d'une précontrainte,
la première aile comprenant un premier élément de précontrainte supérieur (12), un premier élément de précontrainte inférieur (13) et un premier élément d'espacement (14) disposé sur le premier élément de précontrainte inférieur (13),
le premier élément de précontrainte supérieur (12) et le premier élément de précontrainte inférieur (13) étant opposés l'un à l'autre pour générer la précontrainte pour le premier élément de retenue (11) lorsqu'il est reçu dans le premier élément d'accueil (71), et
le premier élément d'espacement (14) étant configuré pour régler une profondeur de pénétration du premier élément de retenue (11) dans le premier élément d'accueil (71);
la deuxième aile comprenant un deuxième élément de précontrainte supérieur (22), un deuxième élément de précontrainte inférieur (23) et un deuxième élément d'espacement (24) disposé sur le deuxième élément de précontrainte inférieur (23),
le deuxième élément de précontrainte supérieur (22) et le deuxième élément de précontrainte inférieur (23) étant opposés l'un à l'autre pour générer la précontrainte pour le deuxième élément de retenue (21) lorsqu'il est reçu dans le deuxième élément d'accueil (73), et
le deuxième élément d'espacement (24) étant configuré pour régler une profondeur de pénétration du deuxième élément de retenue (21) dans le deuxième élément d'accueil (73) afin, ainsi, de fixer une distance entre les pièces de montage (70); et
un agencement de fixation (50) comprenant un logement de fixation (51) pour un moyen de fixation (52), le système de montage comprenant en outre un élément de fixation (52) qui est configuré pour être reçu dans le logement de fixation (51);
**caractérisé en ce que**
l'élément de fixation (52) est réalisé sous forme de vis et le logement de fixation présente un filetage, la vis étant configurée pour exercer, par serrage à l'intérieur du filetage, un effet de force sur l'agencement de retenue (20), afin, ainsi, de régler la hauteur du premier élément de retenue (11) et la hauteur du deuxième élément de retenue (21) à la hauteur de la première (70) et de la deuxième (72) pièce de montage.

2. Système de montage selon la revendication 1, le premier élément d'accueil (71) comprenant une première rainure et le deuxième élément d'accueil (73) comprenant une deuxième rainure, le premier élément de retenue (11) et le deuxième élément de retenue (21) étant configurés pour coopérer avec la première rainure et la deuxième rainure de manière à générer respectivement la précontrainte.

3. Système de montage selon l'une des revendications précédentes, l'agencement de retenue comprenant en outre un troisième élément de retenue (31) et un quatrième élément de retenue (41), le troisième élément de retenue (31) et le quatrième élément de retenue (41) étant également agencés de manière symétrique à l'intérieur de l'agencement de retenue (10), le troisième élément de retenue (31) étant configuré pour s'emboîter avec le premier élément d'accueil (71) de la première pièce de montage (70) et le quatrième élément de retenue (41) étant configuré pour s'emboîter avec le deuxième élément d'accueil de la deuxième pièce de montage;
le troisième élément de retenue (31) et le quatrième élément de retenue (41) étant conçus de manière élastique pour être maintenus à l'intérieur du premier élément d'accueil (71) et du deuxième élément d'accueil au moyen d'une précontrainte.

4. Ensemble composé d'au moins un système de montage selon l'une des revendications 1 à 3 et d'au moins deux pièces de montage (70), lesdites au moins deux pièces de montage (70) pouvant être montées dans une direction horizontale ou dans une direction verticale par ledit au moins un système de montage.

5. Procédé de fabrication d'un système de montage pour le montage de pièces de montage (70, 72), en particulier pour le montage de lames, comprenant les étapes suivantes:
fabrication d'un clip de montage (1, 1', 1"), comprenant:
fourniture d'un agencement de retenue (10) avec un premier élément de retenue (11) conçu comme une première aile et un deuxième élément de retenue (21) conçu comme une deuxième aile, comprenant:
agencement symétrique du premier élément de retenue (11) et du deuxième élément de retenue (21) à l'intérieur de l'agencement de retenue (10),
mise en forme du premier élément de retenue (11) pour qu'il s'emboîte avec un premier élément d'accueil (71) d'une première pièce de montage (70), et
mise en forme du deuxième élément de retenue (21) pour qu'il s'emboîte avec un deuxième élément d'accueil (73) d'une deuxième pièce de montage (72),
configuration du premier élément de retenue (11) et du deuxième élément de retenue (21) en tant qu'éléments élastiques qui sont configurés pour être maintenus à l'intérieur du premier élément d'accueil (71) et du deuxième élément d'accueil (73) au moyen d'une précontrainte,
la première aile comprenant un premier élément de précontrainte supérieur (12), un premier élément de précontrainte inférieur (13) et un premier élément d'espacement (14) disposé sur le premier élément de précontrainte inférieur (13),
le premier élément de précontrainte supérieur (12) et le premier élément de précontrainte inférieur (13) étant opposés l'un à l'autre pour générer la précontrainte pour le premier élément de retenue (11) lorsqu'il est reçu dans le premier élément d'accueil (71), et
le premier élément d'espacement (14) étant configuré pour régler une profondeur de pénétration du premier élément de retenue (11) dans le premier élément d'accueil (71),
la deuxième aile comprenant un deuxième élément de précontrainte supérieur (22), un deuxième élément de précontrainte inférieur (23) et un deuxième élément d'espacement (24) disposé sur le deuxième élément de précontrainte inférieur (23),
le deuxième élément de précontrainte supérieur (22) et le deuxième élément de précontrainte inférieur (23) étant opposés l'un à l'autre pour générer la précontrainte pour le deuxième élément de retenue (21) lorsqu'il est reçu dans le deuxième élément d'accueil (73), et
le deuxième élément d'espacement (24) étant configuré pour régler une profondeur de pénétration du deuxième élément de retenue (21) dans le deuxième élément d'accueil (73) afin, ainsi, de fixer une distance entre les pièces de montage (70);
fourniture d'un agencement de fixation (50) comprenant un logement de fixation (51) pour un moyen de fixation (52); et
fourniture d'un élément de fixation (52) qui est configuré pour être reçu dans le logement de fixation (51);
**caractérisé en ce que**
l'élément de fixation (52) est réalisé sous forme de vis et le logement de fixation présente un filetage, la vis étant configurée pour exercer, par serrage à l'intérieur du filetage, un effet de force sur l'agencement de retenue (20), afin, ainsi, de régler la hauteur du premier élément de retenue (11) et la hauteur du deuxième élément de retenue (21) à la hauteur de la première (70) et de la deuxième (72) pièce de montage.

6. Procédé pour le montage de pièces de montage (70, 72), en particulier pour le montage de lames, comprenant:
fourniture d'au moins un système de montage selon l'une des revendications 1 à 3, et
application d'un effet de force, par l'élément de fixation (52) réalisé sous forme de vis, sur l'agencement de retenue (20) du clip de montage (1, 1', 1") par serrage de la vis dans le filetage d'un logement de fixation (51) afin de régler la hauteur du premier élément de retenue (11) et la hauteur du deuxième élément de retenue (21) à la hauteur de la première (70) et de la deuxième (72) pièce de montage.

7. Utilisation d'au moins un système de montage selon l'une des revendications 1 à 3 pour le montage de pièces de montage (70, 72).
